(19) Europäisches Patentamt
European Patent Office
Office européen des brevets

(11) Veröffentlichungsnummer: **0 017 062**
**B1**

# (12) EUROPÄISCHE PATENTSCHRIFT

(45) Veröffentlichungstag der Patentschrift: **04.07.84**

(51) Int. Cl.³: **H 01 B 3/30**

(21) Anmeldenummer: **80101378.0**

(22) Anmeldetag: **17.03.80**

## (54) Verwendung von amorphen Polyethersulfonen zur Herstellung von isolierten Wickeldrähten aus Kupfer im Extrusionsverfahren.

(30) Priorität: **22.03.79 DE 2911269**

(43) Veröffentlichungstag der Anmeldung: **15.10.80 Patentblatt 80/21**

(45) Bekanntmachung des Hinweises auf die Patenterteilung: **04.07.84 Patentblatt 84/27**

(84) Benannte Vertragsstaaten: **AT BE CH DE FR GB IT NL SE**

(56) Entgegenhaltungen:
**FR - A - 2 220 083**
**US - A - 3 657 177**

**Die Akte enthält technische Angaben, die nach dem Eingang der Anmeldung eingereicht wurden und die nicht in dieser Patentschrift enthalten sind.**

(73) Patentinhaber: **Dr. Beck & Co. AG**
**Grossmannstrasse 105**
**D-2000 Hamburg 28 (DE)**

(72) Erfinder: **Janssen, Harald, Dr.**
**Birkenkamp 1**
**D-2057 Reinbek (DE)**
Erfinder: **Kertscher, Eberhard M.**
**Clé des Champs A**
**CH-1032 Romanel (CH)**
Erfinder: **Blinne, Gerd, Dr.**
**Im Woogtal 7**
**D-6719 Bobenheim (DE)**
Erfinder: **Schmidt, Franz, Dr.**
**Trommstrasse 3**
**D-6800 Mannheim (DE)**

(74) Vertreter: **Rutkowski, Rudi, Dr.**
**c/o BASF Farben + Fasern AG Patentabteilung**
**D-4400 Münster (DE)**

**EP 0 017 062 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft die Herstellung von isolierten Wickeldrähten aus Kupfer im Extrusionsverfahren.

Der Erfindung lag die Aufgabe zugrunde, verbesserte isolierte Wickeldrähte aus Kupfer im Extrusionsverfahren herzustellen.

Die Herstellung isolierter Wickeldrähte (sog. Lackdrähte) durck Extrusion von Thermoplasten wurde bereits in der DE—OS 26 38 763 und einer weiteren älteren Anmeldung (vergl. EP 0 002 224) beschrieben.

Beide Anmeldungen beziehen sich auf teilkristalline thermoplastische Polykondensate, DE—OS 26 38 763 auf solche mit Kristallitschmelzpunkten oberhalb 170°C, vorzugsweise oberhalb 250°C, die zweite Anmeldung auf spezielle Polyamide mit Kristallitschmelzpunkten von mindestens 280°C.

Nachteilig bei den teilkristallinen Polykondensaten gemäß DE—OS 26 38 763, insbesondere bei Polyethylenterephthalat gemäß Beispiel 1 und Polyphenylensulfid gemäß Beispiel 3 ist — wie erst neuerdings festgestellt wurde — die Neigung der Thermoplastbeschichtung zur Rißbildung.

Nach einer Lagerzeit von wenigen Tagen bis zu mehreren Wochen bilden sich insbesondere nach dem Umspulen der beschichteten Drähte oberflächlich feine, konzentrisch verlaufende Risse aus, die offenbar auf nachträgliche Kristallisations- und damit Schrumpfungsprozesse der Polymeren zurückzuführen sind.

Es liegt auf der Hand, daß diese Risse, auch wenn sie nicht bis auf die Metalloberfläche durchgehen, eine gewisse Beeinträchtigung einiger Eigenschaften der Wickeldrähte darstellen.

Polyamide wie z.B. das in Beispiel 2 der DE—OS 26 38 763 erwähnte 6,6-Polyamid weisen diese Rißbildungstendenz zwar nicht auf, jedoch ist insbesondere die Erweichungstemperatur der beschichteten Drähte für einige Anwendungen zu niedrig.

Aus der FR—A—2 220 083 ist ein Verfahren zum Umkleiden von aus Aluminium bestehenden elektrischen Leitern mit Polyarylenethersulfon durch Extrusion bekannt.

Nach den Ausführungen dieser Patentschrift ist es nicht möglich, Kupfer mit Polyarylenethersulfonpolymeren im Extrusionsverfahren zu umhüllen, da die Umhüllung sich bis zu einem gewissen Grade zersetzt, wenn sie bei höheren Temperaturen einem Alterungsprozeß unterworfen werden. Das gealterte Polymer wird nach einer gewissen Zeit spröde und brüchig, weshalb es für eine elektrische Isolierung nicht geeignet ist.

Der im folgenden des öfteren verwendete Ausdruck "Erweichungstemperatur" ist im übrigen nicht identisch mit der zur Charakterisierung des Erweichungsverhaltens von Polymeren üblicherweise ermittelten Größe. Es handelt sich vielmehr um eine Messung an beschichteten Drähten (siehe DIN 46453, Teil 1, Abschnitt 10). Als Trivialbezeichnung ist auch der Ausdruck "Wärmedruck" üblich.

Die für alle Polyamide charakteristische relative hohe Feuchtigkeitsaufnahme kann sich jedoch auch bei dieser speziellen Polyamid-Gruppe für bestimmte Anwendungen nachteilig auswirken.

Es war keineswegs vorauszusehen und wurde Überraschenderweise gefunden, daß amorphe Polyäthersulphone der allgemeinen Formel

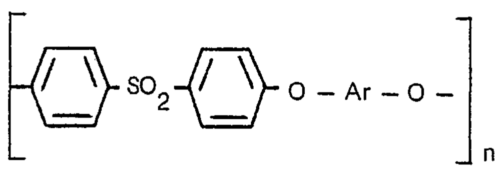

I

in der Ar einen zweiwertigen Phenylen-, Diphenylen- oder Naphthylen- rest oder einen zweiwertigen Rest der Formel II

$$-\!\!\left[\, Ar' - A \,\right]_m\!- Ar' - \qquad \text{II}$$

bedeutet, in der Ar' ein zweiwertiger Phenylenrest, A ein zweiwertiger Rest aus der Gruppe —$SO_2$—, —CO—, —NH—CO—, —CO—NH— und m 1 oder 2 sowie n eine ganze Zahl von 50 bis 150 sein kann, zur Herstellung von isolierten Wickeldrähten aus Kupfer im Extrusionsverfahren hervorragend geeignet sind. Die beschichteten Drähte zeigen keinerlei Neigung zur Rißbildung im obenbeschriebenen Sinne und deren Eigenschaftsniveau sowohl in thermischer und dielektrischer Hinsicht ist, wie aus der Eigenschaftstabelle von Beispiel 1 hervorgeht, hervorragend.

Der Verwendung amorpher Polymerer stand das Vorurteil entgegen, daß die Erweichungstemperaturen der beschichteten Drähte für eine praktische Anwendung zu niedrig seien. Beispielsweise liegen die Erweichungstemperaturen amorpher Polyamide aus Terephthalsäure und Trimethylhexamethylendiamin (Trogamid T; Warenzeichen der Dynamit Novel AG) nur bei 150°C und solcher aus Isophthalsäure, Adipinsäure, Hexamethylendiamin und Isophorondiamin nur bie 165°C; die Erweichungstemperaturen verwandter teilkristalliner Polymerer, z.B. die des Polyamids aus Adipinsäure und Hexamethylendiamin (Nylon-6,6) dagegen bie 215°C (alle Angaben bezogen auf beschichtete Drähte in obengen. Sinne).

Wie aus untenstehender Tabelle ersichtlich, trägt die vorliegende Erfindung zu Überwindung dieses Vorurteils bei.

Die mit amorphen Polyäthersulphonen beschichteten Kupferdrähte weisen Erweichungstemperaturen von ca. 245°C auf, liegen also in der gleichen Größenordnung wie die in den älteren Anmeldungen erwähnten teilkristallinen Polymeren (z.B. Polyäthylenterephthalat).

Besonders zu beachten ist der hohe Steilanstieg des dielektischen Verlustfaktors von über 200°C. Die entsprechenden Werte für teilkristalline Polymere liegen deutlich darunter, z.B. für Polyamide höchstens bei 120°C und für Polyäthylenterephthalat höchstens bei 180°C. Auch der hohe Wärmeschock der amorphen Polyäthersulphone von ca. 250°C ist vorteilhaft.

Als Polyäthersulphone kommen Polymere der obengen. Formel zum Einsatz, z.B. solche mit der Struktureinheit

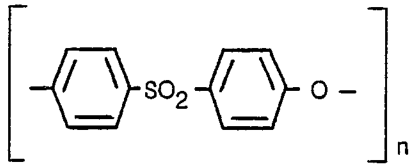

III

oder solche mit der Struktureinheit

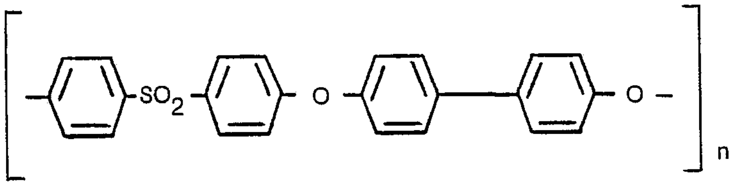

IV

in der n jeweils Werte zwischen 50 und 150 bedeutet, deren Herstellung z.B. in der DE—AS 1545106 eingehend beschrieben ist.

Natürlich können auch Copolymerisate oder Polymermischungen, die aus verschiedenen Einheiten der Formel I aufgebaut sind, zum Einsatz gelangen.

Zwecks Erzielung bestimmter Effekte kann es angebracht sein, den Polyäthersulphonen geringe Mengen sonstiger Stoffe, vorzugsweise Hilfsstoffe, zuzumischen — beispielsweise Siliconharz zur Verflaufsverbesserung, Stabilisatoren und Flammschutzmittel.

Da in der Praxis gelegentlich farbige Wickeldrähte zum Einsatz kommen, kann auch die Mitverwendung von Farbstoffen bzw. Pigmenten angezeigt sein; wie z.B. Titandioxid oder Zinksulfid.

Auch Füllstoffe, wie z.B. Kaolin, Talkum, Kreide, Schwerspat, Gneis, Glimmer, Glasmehl, Glaskugeln oder kurzgeschnittene Glasfasern oder Gemisch dieser Füllstoffe, u.a. in Mengen von ca. 1—30%, können dem Polyäthersulphon zugesetzt werden. Zwecks Erzielung besonderer Effekte können auch hoch- oder nichtschmelzende Polymere, wie z.B. Polytetrafluoräthylen oder Polyimide als Füllstoffe zugesetzt werden.

Wie aus dem Beispiel im einzelnen ersichtlich, ermöglicht das erfindungsgemäße Verfahren die Herstellung qualitativ hochwertiger Wickeldrähte bei entscheidend verbesserter Wirtschaftlichkeit. Bez. der verwendeten Extrusionsvorrichtung wird auf die DE—OS 27 28 883 verwiesen.

Eine Verstreckung gleichzeitig mit der Beschichtung des Drahtes, wie sie für die Herstellung der bekannten starkwandigen Beschichtungen erforderlich ist, wird gemäß Erfindung nicht durchgeführt.

Es sei noch erwähnt, daß für die neuen im Extrusionsverfahren isolierten Wickeldrähte aus Kupfer z.Z. keine speziellen Prüfanforderungen vorliegen. Die Prüfung erfolgt gemäß DIN 46453, Teil 1, für lackisolierte Wickeldrähte, zumal die im Extrusionsverfahren isolierten Wickeldrähte für die gleichen Anwendungsgebiete wie erstere zum Einsatz kommen.

## Beispiel 1:

Ein Polyäthersulphon der Formel

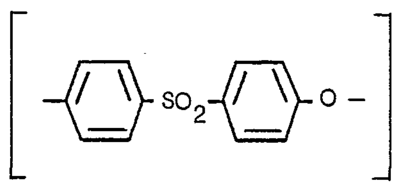

ca. 100

wurde in den Einfüllstutzen eines in der DE—OS 27 28 883 im Detail beschriebenen Extruders eingegeben.

Die Extrudertemperaturen vom Einlauf bis zur Düse betrugen an den einzelnen Temperaturmeßstellen 315°C/340°C/350°C/340°C/350°C/370°C.

Zum Einsatz gelangte weichgeglühter Kupferdraht von 0,6 mm Durchmesser, der über eine Abspulvorrichtung zunächst eine Vorheizstrecke — in der der Draht auf ca. 240°C bei einer Verweilzeit von ca. 0,5 sec. erhitzt wurde — und nach Passieren der Beschichtungszone im Extruderkopf eine Abstreiferdüse, die die Schichtstärke reguliert, durchlief.

Nach Passieren einer Kühlstrecke wurde der beschichtete Draht aufgespult; die Abzugsgeschwindigkeit betrug 200 m/min.

Die aufgetragene Gesamtschichtstärke (Durchmesserzunahme) betrug 54 $\mu$m und entsprach somit Grad 3 nach DIN 46435 von April 1977.

Eigenschaften des Wickeldrahtes

Sofern nicht anders vermerkt alle Werte gemäß DIN 46453, Teil 1, von April 1977.

| | |
|---|---|
| Härte | H |
| Resthärte nach Einwirkung (jeweils 30 min/60°C) von: | |
| Äthanol | H |
| Wasser | H |
| Erweichungstemperatur | 245°C |
| Haftung beim Reißen | in Ordnung |
| Haftung nach Dehnung | Nach linearer Dehnung von 15% und Wickeln um den eigenen Durchmesser: in Ordnung |
| Wärmeschock (nach Wickeln um den eigenen Durchmesser) | bei 250°C in Ordnung |
| Steilanstieg des dielektrischen Verlustfaktors | 210°C |
| Frigen® 22-Extraktion | 0.11% |
| Durchschlagsspannung (Twist bei Normaltemperatur | 6.2 kV |
| bei 150°C | 5.2 kV |

Beispiel 2:

Polyäthersulphon der in Beispiel 1 aufgeführten Formel, pigmentiert mit 2% Titandioxid wurde wie in Beispiel 1 beschrieben, verarbeitet. Die Extrudertemperaturen vom Einlauf bis zur Düse betrugen 300°C/330°C/340°C/350°C/350°C/360°C, die Gesamtschichtstärke (Durchmesserzunahme) betrug 62 $\mu$m.

Die Wickeldrahteigenschaften waren sehr ähnlich der des ungefüllten Materials.

Geringfügige Unterschiede ergaben sich nur in folgenden Werten:

| | |
|---|---|
| Erweichungstemperatur | 240°C |
| Haftung und Dehnbarkeit | Nach linearer Dehnung von 25% und Wickeln um den eigenen Durchmesser: in Ordnung |
| Steilanstieg des dielektrischen Verlustfaktors | 220°C |
| Durchschlagsspannung bei Normaltemperatur | 6.0 kV |
| bei 150°C | 5.2 kV |

(Frigen® 22 Extraktion nicht gemessen)

Beispiel 3:

Polyäthersulphon der in Beispiel 1 aufgeführten Formel, pigmentiert mit 10% Titandioxid, wurde wie in Beispiel 1 beschrieben verarbeitet.

Die Extrudertemperaturen vom Einlauf bis zur Düse betrugen 315°C/340°C/350°C/350°C/350°C/370°C.

Die Gesamtschichtstärke (Durchmesserzunahme) betrug 52 $\mu$m.

Eigenschaften des Wickeldrahtes:

| | |
|---|---|
| Härte | H |
| Resthärte nach Einwirkung (jeweils 30 min/60°C) von: | |
| Äthanol | H |
| Wasser | H |
| Erweichungstemperatur | 245°C |
| Haftung beim Reißen | in Ordnung |
| Haftung nach Dehnung | Nach linearer Dehnung von 15% und Wickeln um den eigenen Durchmesser: in Ordnung |
| Steilanstieg des dielektrischen Verlustfaktors | 220—225°C |
| Durchschlagsspannung (Twist) bei Normaltemperatur | 4.1 kV |

Beispiel 4:

Polyäthersulphon der in Beispiel 1 angeführten Formel, gefüllt, mit 10% calciniertem Kaolin, wurde wie in Beispiel 1 beschreiben verarbeitet.

Die Extrudertemperaturen entsprachen Beispiel 3, die Gesamtschichtstärke (Durchmesserzunahme) betrug 55 $\mu$m.

| Eigenschaften des Wickeldrahtes | |
|---|---|
| Härte | H |
| Resthärte nach Einwirkung (jeweils 30 min/60°C) von: | |
| Äthanol | H |
| Wasser | H |
| Erweichungstemperatur | 245°C |
| Haftung beim Reißen | in Ordnung |
| Haftung nach Dehnung | nach linearer Dehnung von 15% und Wickeln um den eigenen Durchmesser: in Ordnung |
| Wärmeschock (nach Wickeln um den eigenen Durchmesser) | bei 250°C in Ordnung |
| Steilanstieg des dielektrischen Verlustfaktors | 215°C |
| Durchschlagsspannung (Twist) bei Normaltemperatur | 3.9 kV |

Beispiel 5:

Polyäthersulphon der in Beispiel 1 angeführten chemischen Struktur, pigmentiert mit 10% Zinksulfid wurde wie in Beispiel 1 beschrieben verarbeitet.

Die Extrudertemperaturen entsprachen Beispiel 3, die Gesamtschichtstärke (Durchmesserzunahme) betrug 51 $\mu$m.

| Eigenschaften des Wickeldrahtes | |
|---|---|
| Härte | H |
| Resthärte nach Einwirkung (jeweils 30 min/60°C) von: | |
| Äthanol | H |
| Wasser | H |
| Erweichungstemperatur | 240°C |
| Haftung beim Reißen | in Ordnung |
| Haftung | Wickeln um den eigenen Durchmesser: in Ordnung |
| Wärmeschock (nach Wickeln um den eigenen Durchmesser) | bei 250°C in Ordnung |
| Steilanstieg des dielektrischen Verlustfaktors | 210—215°C |

**Patentanspruch**

Verwendung von amorphen Polyäthersulphonen der allgemeinen Formel

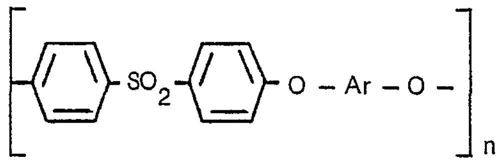

I

in der Ar einen zweiwertigen Phenylen-, Diphenylen- oder Naphthylen- rest oder einen zweiwertigen Rest der Formel II

$$-\!\!\!\![\ Ar' - A\ ]_m - Ar' \qquad II$$

bedeutet, in der Ar′ ein zweiwertiger Phenylenrest, A ein zweiwertiger Rest aus der Gruppe $-SO_2-$, —CO—, —NH—CO—, —CO—NH— und m 1 oder 2 sowie n eine ganze Zahl bon 50 bis 150 sein kann, zur Herstellung von isolierten Wickeldrähten aus Kupfer im Extrusionsverfahren, ohne anschließendes Verstrecken der Hülle, wobei die Schichtstärke der Isolation den Erfordernissen des Normblattes DIN 46435 genügt.

**Revendication**

Utilisation de polyéthersulfones amorphes de la formule générale:

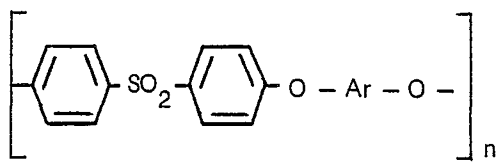

I

dans laquelle Ar représente un radical divalent phénylène, biphénylène ou naphtylène ou un radical divalent de formule:

$$-\!\!\!\![\ Ar' - A\ ]_m - Ar' - \qquad II$$

dans laquelle Ar′ peut être un radical divalent phénylène, A un radical divalent pris dans le groupe comprenant $-SO_2-$, —CO—, —NH—CO—, —CO—NH— et *m* vaut 1 ou 2 et *n* est un nombre entier de 50 à 150) pour la fabrication de fils de bobinage en cuivre isolés par le procédé d'extrusion non suivi d'un étirage du revêtement, l'épaisseur de couche de l'isolant répondant aux exigences de la norme DIN 46435.

**Claim**

Use of amorphous polyether sulfones of the general formula

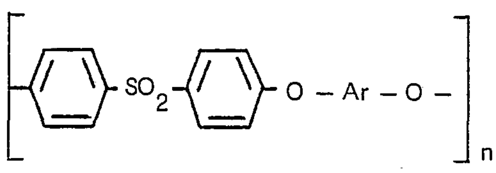

I

in which Ar represents a divalent phenylene, diphenylene or naphthylene residue or a divalent residue of formula II

$$-\!\!\!\![\ Ar' - A\ ]_m - Ar' - \qquad II$$

in which Ar′ stands for a divalent phenylene residue, A stands for a divalent residue from the group $-SO_2-$, —CO—, —NH—CO—, —CO—NH— and in which m represents 1 or 2 and n an integer from 50 to 150, for the production of insulated winding wires from copper by extrusion, without stretching the coating so that the total thickness of the insulation meets with the requirements of the German Industrial Standard DIN 46435.